# EUROPÄISCHE PATENTANMELDUNG

(11) **EP 2 656 896 A1**
(43) Veröffentlichungstag der Anmeldung: **30.10.2013**
(21) Anmeldenummer: 13001569.6
(22) Anmeldetag: 27.03.2013
(51) Int. Cl.: B01D 46/00, B01D 46/04, B01D 46/10, B01D 46/42, B01D 46/52

(54) **Staubfilter-Patrone und Filtereinrichtung**

(30) Priorität: 24.04.2012 DE 102012008149
(71) Anmelder: Zeppelin Reimelt GmbH, 63322 Rödermark (DE)
(72) Erfinder: Rumpf, Wolfhard, 63322 Rödermark (DE); Faller, Martin, 64846 Groß-Zimmern (DE)
(74) Vertreter: Knoblauch, Andreas

(57) **Zusammenfassung**

Es wird eine Staubfilter-Patrone mit einer Filterwand (3) angegeben, die einen Innenraum (5) umschließt, der an einem Ende (6) geschlossen ist, und einer Befestigungsgeometrie (12) am anderen Ende.

Man möchte die Montage einer derartigen Staubfilter-Patrone einfach gestalten und das Risiko von Beschädigungen der Patrone dabei klein halten können.

Hierzu ist vorgesehen, dass die Patrone (2) im Bereich der Befestigungsgeometrie (12) eine Handhabe (7) aufweist.

## Beschreibung

Die Erfindung betrifft eine Staubfilter-Patrone mit einer Filterwand, die einen Innenraum umschließt, der an einem Ende geschlossen ist, und einer Befestigungsgeometrie am anderen Ende.

Ferner betrifft die Erfindung eine Filtereinrichtung mit mindestens einer derartigen Patrone.

Eine derartige Staubfilter-Patrone und die entsprechende Filtereinrichtung sind aus DE 43 24 065 A1 bekannt.

Eine Filtereinrichtung mit einer derartigen Staubfilter-Patrone wird vielfach verwendet, um ein Gas, beispielsweise Förderluft, die zum Transport eines staubförmigen Guts, beispielsweise von Mehl, verwendet worden ist, zu reinigen, bevor dieses Fördergas wieder in die Umgebung entlassen oder dem Förderkreislauf wieder zugeführt werden kann. Das Fördergas durchdringt die Filterwand von außen nach innen. Die Filterwand bildet das Filtermaterial oder Filtermedium und hält die staubförmigen Partikel zurück. Diese fallen teilweise in einen Produktraum, teilweise bleiben sie außen an der Filterwand hängen. Das gereinigte Fördergas kann aus dem Innenraum der Patrone abgeführt werden. Von Zeit zu Zeit wird ein Druckgasstoß in den Innenraum gerichtet, der die Filterwand vom Innenraum aus nach außen durchdringt und die Filterwand außen abreinigt.

Trotz der regelmäßigen Reinigung ist eine derartige Patrone im Grunde ein Verbrauchsteil, das von Zeit zu Zeit ersetzt werden muss. Die Patrone kann sich trotz der Abreinigung zusetzen. Sie kann verschleißen, reißen oder auf andere Weise beschädigt werden. Sie ist dann, kurz gesagt, "verbraucht". Beim Ersetzen wird die verbrauchte Patrone aus der Filtereinrichtung entfernt, und eine neue Staubfilter-Patrone wird in die Filtereinrichtung eingesetzt. Allerdings besteht hierbei vielfach die Gefahr, dass die Staubfilter-Patrone beschädigt wird, insbesondere an ihrer Filterwand. Dies führ zu einer verkürzten Lebensdauer oder sogar zu einer unzureichenden Reinigung des Gasstroms. Ebenfalls kritisch ist, dass Teile der Patrone gelöst werden können und dann im Betrieb abfallen, so dass sie in das Gut-Produkt fallen, d.h. in das aus dem Fördergasstrom herausgefilterte Produkt. Ein derartiger Fall kann insbesondere bei so genannten Sternfilter-Patronen auftreten, bei denen die Filterwand zickzackförmig gefaltet ist. Bei solchen Sternfilter-Patronen ist die Filterwand vielfach mit einer Banderole versehen, die beim Reinigen der Filterwand ein übermäßiges Aufblähen der Filterwand verhindern sollen. Bei einer unsachgemäßen Handhabung kann sich eine derartige Banderole lösen und dann später im Betrieb abfallen.

Der Erfindung liegt die Aufgabe zugrunde, die Montage einfach zu gestalten und das Risiko von Beschädigungen der Patrone klein zu halten.

Diese Aufgabe wird bei einer Staubfilter-Patrone der eingangs genannten Art dadurch gelöst, dass die Patrone im Bereich der Befestigungsgeometrie eine Handhabe aufweist.

Durch die Handhabe steht nun an der Patrone ein definierter Bereich zur Verfügung, an dem ein Monteur angreifen kann, um die Staubfilter-Patrone in der Filtereinrichtung zu montieren. Die Handhabe, die auch als geometrisch definierter Griffbereich bezeichnet werden kann, verhindert, dass der Monteur bei der Montage auf die Filterwand greift und dadurch die Patrone beschädigt. Die Handhabe stellt also einen Bereich außerhalb der Filterwand zur Verfügung. Solange der Monteur die Patrone nur an der Handhabe ergreift, sind Beschädigungen praktisch ausgeschlossen. Die Handhabe ist im Bereich der Befestigungsgeometrie angeordnet, so dass auch das Verbinden der Befestigungsgeometrie mit einer entsprechenden Gegengeometrie an der Filtereinrichtung mit geringem Aufwand vorgenommen werden kann. Die Zuordnung zwischen der Handhabe und der Befestigungsgeometrie erlaubt eine direkte Steuerung der Bewegung der Befestigungsgeometrie durch den Monteur. Die Handhabe erleichtert es damit, die Patrone sicher in der gewünschten Position zu fixieren. Die Handhabe erlaubt dem Monteur ein Ergreifen der Patrone, so dass die Montage in Abhängigkeit vom Durchmesser mit einer Hand oder mit beiden Händen möglich ist.

Vorzugsweise ist die Handhabe druckfest ausgebildet. "Druckfest" bedeutet dabei, dass ein Druck, den der Monteur auf die Handhabe ausübt, nicht zu einer Beschädigung der Filterwand führt. Ein derartiger Druck kann zwar zu einer leichten Verformung der Handhabe führen. Diese Verformung ist aber so gering, dass die Filterwand darunter nicht leidet.

Vorzugsweise ist die Handhabe durch eine Drehmoment übertragende Verbindung mit der Befestigungsgeometrie verbunden. Dies ist insbesondere dann von Vorteil, wenn die Befestigungsgeometrie als Schraubgewinde oder als Bajonettverschluss ausgebildet ist. In diesem Fall wird die Befestigung der Patrone in der Filtereinrichtung dadurch vorgenommen, dass die Patrone gegenüber der Filtereinrichtung verdreht wird. Dies kann auf einfache Weise durch die Drehung der Handhabe bewirkt werden. Bei einer Bajonett-Verbindung kann man die Handhabe auch verwenden, um die notwendige axiale Bewegung der Patrone gegenüber der Filtereinrichtung zu bewirken.

Vorzugsweise weist die Handhabe eine Ringwand auf. Eine Ringwand ist in Umfangsrichtung durchgehend ausgebildet, so dass der Monteur unabhängig von der aktuellen Drehstellung der Patrone die Patrone mit Sicherheit so ergreifen kann, dass die Filterwand nicht beschädigt wird. Eine Ringwand lässt sich leicht mit der gewünschten Festigkeit ausbilden.

Vorzugsweise weist die Ringwand eine axiale Länge von mindestens 40 mm auf. Damit hat die Ringwand in axialer Richtung (bezogen auf eine Achse der Ringwand) eine Erstreckung, die ausreicht, dass der Monteur mit dem Daumen und zwei oder drei Fingern an der Handhabe angreifen kann, ohne dass die Gefahr besteht, dass er auf die Filterwand greift und diese beschädigt.

Vorzugsweise ist innerhalb der Ringwand eine der Filterwand zugewandte Bodenwand ausgebildet, die die Filterwand stirnseitig abdeckt. Diese Bodenwand dient zum einen zur Aussteifung der Ringwand und erhöht damit den Widerstand gegen eine Verformung der Handhabe, so dass das Risiko einer Beschädigung der Filterwand durch eine Verformung der Handhabe weiter vermindert wird. Zum anderen deckt die Bodenwand die Filterwand stirnseitig ab, so dass das vom staubförmigen Produkt zu reinigende Gas tatsächlich nur durch die Filterwand in den Innenraum gelangen kann. Ein anderer Weg ist durch die Bodenwand versperrt.

Hierbei ist bevorzugt, dass die Bodenwand einen parallel zur Ringwand gerichteten Flansch aufweist, der mit der Bodenwand und der Ringwand einen im Querschnitt U-förmigen Aufnahmeraum bildet, in den die Filterwand hineinragt. Ein derartiger Aufnahmeraum erleichtert die Herstellung der Patrone. Mit der Ausbildung des U-förmigen Aufnahmeraums steht ein Raum zur Verfügung, in den die Filterwand mit ihrer Stirnseite eingesetzt werden kann und sozusagen automatisch positioniert ist. Der Begriff "parallel" ist hier nicht im mathematisch strengen Sinn zu verstehen.

Hierbei ist bevorzugt, dass der Aufnahmeraum zumindest teilweise mit einer Füllmasse gefüllt ist. Die Füllmasse kann verwendet werden, um die Filterwand mit der Handhabe zu verbinden. Die Füllmasse deckt zusätzlich einen Bereich der Filterwand ab, der der Bodenwand benachbart ist. Auch durch diesen Bereich kann kein mit dem staubförmigen Produkt beladenes Gas mehr treten und das staubförmige Produkt dort ablagern. Dementsprechend muss der Bereich der Filterwand dort, wo die Füllmasse angeordnet ist, nicht mehr abgereinigt werden. Dies hat Vorteile bei der Ausrichtung der Patrone relativ zu einer Blasgasdüse, die zum Abreinigen der Filterwand verwendet wird. Man kann dafür sorgen, dass der Gasdruck, der zum Reinigen der Filterwand verwendet wird, jenseits der Füllmasse auf die Innenwand auftrifft, so dass sichergestellt wird, dass der gesamte Blasgasstrom zum Reinigen der Filterwand verwendet werden kann.

Vorzugsweise ist die Handhabe über eine Stirnwand mit der Befestigungsgeometrie verbunden. Die Stirnwand erlaubt es, den Durchmesser der Filterwand und den Durchmesser der Befestigungsgeometrie sozusagen voneinander zu entkoppeln. Man kann also auch eine Patrone mit einer Filterwand verwenden, die einen relativ großen Durchmesser hat, ohne dass man die Befestigungsgeometrie in gleicher Weise vergrößern müsste.

Vorzugsweise weist die Handhabe eine Drehmomentangriffsgeometrie auf. Die Drehmomentangriffsgeometrie erleichtert es einem Monteur, an der Handhabe anzugreifen und ein Drehmoment auf die Handhabe auszuüben.

Die Drehmomentangriffsgeometrie kann unterschiedliche Ausgestaltungen haben. In einem einfachen Fall kann sie durch eine Reihe von achsparallelen Vorsprüngen gebildet sein, die über den Außenumfang der Handhabe verteilt sind. Die Drehmomentangriffsgeometrie kann auch so ausgebildet sein, dass ein Werkzeug angreifen kann. In diesem Fall kann die Drehmomentangriffsgeometrie beispielsweise durch ein Polygon gebildet sein.

Die Erfindung betrifft auch eine Filtereinrichtung mit mindestens einer Filterpatrone, wie sie oben geschildert worden ist.

Hierbei ist bevorzugt, dass eine Blasgasdüse in den Innenraum gerichtet ist, wobei die Handhabe einen Abstand zwischen der Filterwand und der Blasgasdüse einstellt. Die Handhabe erzeugt also einen Abstand zwischen der Blasgasdüse und der Filterwand, der so bemessen ist, dass der Gasabreinigungsstoß auf die Flächen der Filterwand wirkt, die mit dem staubförmigen Produkt beladen sind. Damit kann man gewährleisten, dass die Filterwand in einem höheren Maße abgereinigt wird als bisher. Es gibt strömungstechnisch keinen Totbereich, so dass eine sehr gute Abreinigung sichergestellt werden kann.

Hierbei ist bevorzugt, dass die Handhabe die Blasgasdüse zumindest teilweise umgibt. Die Blasgasdüse ragt also etwas in die Handhabe hinein. Auf diese Weise lassen sich optimale Strömungsverhältnisse erzeugen.

Vorzugsweise ist die Filterpatrone über eine Bajonett-Verbindung mit der Filtereinrichtung verbunden. Eine Bajonett-Verbindung wird in der Regel dadurch hergestellt, dass die Handhabe über einen begrenzten Winkelbereich von beispielsweise 90° gegenüber der Filtereinrichtung verdreht wird. Damit lässt sich eine Bajonett-Verbindung in der Regel schneller herstellen als eine Schraubverbindung, bei der mehrere Umdrehungen der Filterpatrone gegenüber der Filtereinrichtung notwendig wären. Die Bajonett-Verbindung ist unanfälliger gegen eine Verschmutzung. Man kann mit höherer Zuverlässigkeit feststellen, ob die Filterpatrone bis in die gewünschte Endlage eingesetzt worden ist.

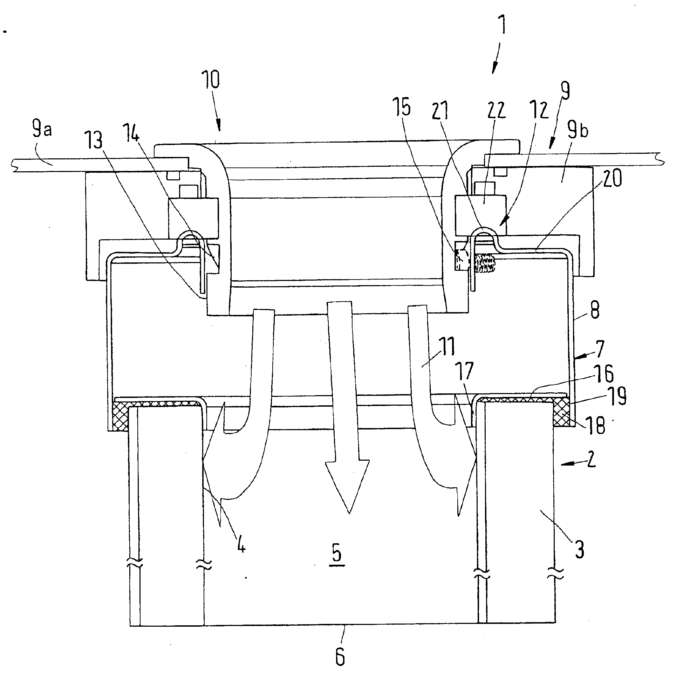

Die Erfindung wird im Folgenden anhand eines bevorzugten Ausführungsbeispiels in Verbindung mit der Zeichnung beschrieben. Hierin zeigt die
- einzige Figur:: einen Ausschnitt einer Filtereinrichtung mit einer ersten Ausführungsform einer Handhabe

Eine im Ausschnitt dargestellte Filtereinrichtung 1 weist eine Staubfilter-Patrone 2 auf, die im vorliegenden Fall als Sternfilter-Patrone ausgebildet ist. Die Patrone 2 weist ein Filtermedium auf, das zickzackförmig gefaltet ist. Dieses Filtermedium ist zu einem Ring geformt und bildet damit eine Wand, die im Folgenden kurz als Filterwand 3 bezeichnet wird. Die Filterwand 3 umgibt einen Stützkorb 4, der beispielsweise als Lochblech ausgebildet sein kann.

Alternativ kann die Filterwand 3 auch aus einem Filtertuch gebildet sein, dass strumpfartig über einen Stützkorb geführt ist, der ebenfalls als Lochblech oder als Drahtkonstruktion ausgebildet sein. Andere Filtermaterialien oder -medien sind ebenfalls möglich.

Die Filterwand 3 umgibt einen Innenraum 5, der an seinem unteren Ende 6 geschlossen ist. Die Bezeichnungen "unten" und "oben" beziehen sich auf die Darstellung in der Zeichnung. Damit soll keine Festlegung der Ausrichtung der Filtereinrichtung 1 oder der Patrone 2 im Raum verbunden sein.

Die Filterwand 3 ist mit einer Handhabe 7 verbunden. Die Handhabe 7 weist eine Ringwand 8 auf, die beispielsweise aus einem Metall oder aus, einem stabilen Kunststoff gebildet ist. Die Ringwand 8 ist so stabil ausgebildet, dass sie eine gewisse Druckfestigkeit aufweist. Diese Druckfestigkeit ist so gewählt, dass die menschliche Hand an der Ringwand 8 anfassen kann, ohne sie nennenswert zu verformen, auch wenn ein gewisser Druck ausgeübt wird. Gewisse kleine Verformungen sind allerdings zulässig, solange sie die Ringwand 8 nicht beeinträchtigen. Wie zu erkennen ist, verläuft die Ringwand 8 etwa parallel zur Filterwand 3.

Die Ringwand 8 weist in axialer Richtung eine Länge von mindestens 40 mm auf. Vorzugsweise weist sie sogar eine größere Länge auf, beispielsweise 60 mm. Damit ist eine ausreichende Länge vorgesehen, die es einem Monteur ermöglicht, die Handhabe 7 an der Ringwand 8 mit dem Daumen und zwei oder drei Fingern anzugreifen, um die Patrone 2 in ein Gehäuse 9 der Filtereinrichtung 1 einzusetzen und dort zu befestigen. Das Gehäuse 9 weist eine Trennwand 9a auf, die die Filtereinrichtung 1 in einen Produktraum (hier unterhalb der Trennwand 9a) und einen Reingasraum (hier oberhalb der Trennwand 9a) trennt. An der Trennwand 9a liegt ein Montageelement 9b an.

An der Außenwand der Handhabe 7 kann noch eine Drehmomentangriffsgeometrie vorgesehen sein (nicht dargestellt). Diese Drehmomentangriffsgeometrie kann durch einfache achsparallel verlaufende Vorsprünge gebildet sein, an denen ein Monteur mit seiner Hand oder seinen Händen angreifen kann, um ein Drehmoment auf die Handhabe 7 auszuüben. Wenn der Monteur ein Werkzeug verwenden sollte, dann sollte die Handhabe 7 eine Drehmomentangriffsgeometrie aufweisen, die an das Werkzeug angepasst ist. Beispielsweise kann die Handhabe 7 einen Außenquerschnitt aufweisen, der die Form eines Polygongs annimmt.

Das Gehäuse 9 weist in dem Bereich, in dem die Patrone 2 eingebaut werden soll, eine Blasgasdüse 10 auf, die die Trennwand 9a durchragt und mit dem Montagelement 9b verschraubt ist. Durch die Blasgasdüse 10 kann ein durch Pfeile 11 symbolisierter Druckgasstoß in den Innenraum 5 gerichtet werden. Der Druckgasstrom ist entgegen der "normalen" Durchströmungsrichtung durch die Filterwand 3 gerichtet. Bei der normalen Durchströmung durchströmt ein mit einem staubförmigen Produkt beladener Gasstrom die Filterwand 3 von außen nach innen. Die Filterwand 3 gestattet lediglich dem Gas den Durchtritt. Das staubförmige Produkt bleibt an der Filterwand 3 hängen. Ein Teil dieses staubförmigen Produkts wird von der Filterwand 3 abfallen. Ein anderer Teil wird jedoch hängen bleiben. Der durch die Pfeile 11 dargestellte Druckgasstrom sorgt dann periodisch dafür, dass dieser anhaftende Teil des staubförmigen Produkts wieder von der Außenseite der Filterwand 3 abgeblasen wird, wie dies allgemein bekannt ist.

Die Handhabe 7 weist eine Befestigungsgeometrie 12 auf, die im vorliegenden Fall als Bajonett-Verbindung ausgebildet ist. Die Blasgasdüse 10 ist mit einer Außenwand 13 ausgebildet, in der eine Nut 14 vorgesehen ist. In diese Nut 14 kann ein Vorsprung 15 eingreifen, der an der Handhabe 7 befestigt ist. Eine derartige Bajonett-Verbindung ist beispielsweise in DE 43 24 065 A1 offenbart. Auf diese Offenbarung wird hier Bezug genommen.

Eine Bajonett-Verbindung hat den Vorteil, dass zur Montage der Filterpatrone 2 nur eine begrenzte Drehung der Filterpatrone 2 gegenüber dem Gehäuse 9 erforderlich ist. In der Regel reicht eine Drehung um 90° aus, um die Filterpatrone 2 gegenüber dem Gehäuse 9 in die gewünschte Endposition zu bringen. Eine Bajonett-Verbindung lässt sich in den meisten Fällen leichter sauber halten als eine Gewindepaarung einer Schraubverbindung. Hier besteht vielfach die Gefahr, dass sich das zu filternde Gut hier festsetzt, so dass der Monteur nicht beurteilen kann, ob ein erhöhter Widerstand beim Einschrauben auf eine Verschmutzung des Gewindes oder auf das Erreichen des Endanschlags zurückzuführen ist.

Alternativ kann die Handhabe 7 auch eine andere Befestigungsgeometrie aufweisen, beispielsweise ein Innengewinde, mit dem sie auf ein entsprechendes Außengewinde auf der Außenwand 13 aufgeschraubt werden kann. Eine Bajonettverbindung hat hier aber Vorteile, weil sie beispielsweise unempfindlicher gegen Verschmutzung ist.

In beiden Fällen kann die Handhabe 7 verwendet werden, um die zum Befestigen der Patrone 2 an der Blasgasdüse 10 erforderliche Drehbewegung zu bewirken. Die Handhabe 7 ist in Drehmoment übertragender Verbindung mit der Befestigungsgeometrie 12 verbunden.

Die Handhabe 7 weist innerhalb der Ringwand 8 eine Bodenwand 16 auf, die wiederum einen etwa parallel zur Ringwand 8 gerichteten Flansch 17 aufweist, der mit der Ringwand 8 und der Bodenwand 16 einen Aufnahmeraum 18 bildet, in den die Filterwand 3 hineinragt. Die Bodenwand 16 deckt dabei die Stirnseite der Filterwand 3 ab. Zusätzlich kann eine Füllmasse 19 im Aufnahmeraum 18 vorgesehen sein. Die Füllmasse 19 kann verwendet werden, um die Filterwand 3 und die Handhabe 7 miteinander zu verbinden. Sie kann darüber hinaus verhindern, dass sich im Bereich des Aufnahmeraums 18 staubförmiges Produkt an der Filterwand 3 anlagert.

Die Handhabe 7 bewirkt einen gewissen Abstand zwischen dem Austritt aus der Blasgasdüse 10 und der Innenseite der Filterwand 3. Dies hat den Vorteil, dass man den Totbereich der Filterwand 3, also den Bereich, der nicht von dem Blasgasstrom erreicht wird, sehr klein halten oder sogar völlig vermeiden kann. Damit wird sichergestellt, dass die gesamte Filterwand 3 durch den Blasgasstrom abgereinigt werden kann. Eine Optimierung kann man beispielsweise durch eine entsprechende Ausgestaltung der axialen Länge der Ringwand 8 vornehmen. Damit ergeben sich strömungstechnisch optimale Verhältnisse. Der Luftführungsbereich wird durch die Handhabe 7 positiv verlängert. Der Gasabreinigungsstoß (nach der Venturidüse) wirkt im Inneren der Patrone 2 sofort auf die Lochung des Stützkorbs und die zugänglichen Falten. Daher gibt es strömungstechnisch keinen Totbereich. Eine optimale Abreinigung der Filterwand beziehungsweise des Filtermediums wird so sichergestellt.

Die Handhabe kann auch aus antistatischen Kunststoffmaterialien gebildet sein, die auch den erforderlichen Vorschriften für den Lebensmittelkontakt entsprechen, falls dies erforderlich sein sollte.

Die Handhabe 7 weist eine Stirnwand 20 auf, mit der die Ringwand 8 und die Befestigungsgeometrie 12 miteinander verbunden sind. Die Stirnwand 20 kann verwendet werden, um eine Anpassung der Staubfilter-Patrone 2 an die Befestigungsgeometrie 12 vorzunehmen, d.h. man kann Patronen 2 mit unterschiedlichen Durchmessern an der gleichen Blasgasdüse 10 verwenden. Die Anpassung erfolgt dann über die radiale Ausdehnung der Stirnwand 20. Die Stirnwand 20 ist hier mit einem Winkel von etwa 90° zur Ringwand 8 dargestellt. Die Stirnwand 20 kann aber auch konisch ausgebildet sein und dann einen stumpfen Winkel mit der Ringwand 9 einschließen, beispielsweise einen Winkel im Bereich von 120° bis 150°.

Die Stirnwand 20 weist benachbart zur Befestigungsgeometrie 12 noch einen Ringwulst 21 auf, der gegen ein Dichtungselement 22 gepresst wird, wenn die Handhabe 7 und die Blasgasdüse 10 miteinander in Eingriff kommen. Damit wird eine hervorragende Dichtigkeit im Bereich der Befestigungsgeometrie 12 erzielt.

Die Handhabe 7 weist sowohl an der Außenseite der Ringwand 8 als auch an der Außenseite der Stirnwand 20 nur glatte Flächen auf, die leicht abzureinigen sind. In vielen Fällen wird sich nicht verhindern lassen, dass sich im Betrieb ein gewisser Staubanteil auch an der Handhabe 7 niederschlägt. Dies ist aber unkritisch, weil dieser Staub leicht manuell abgereinigt werden kann.

Durch die Handhabe 7 ist es nun möglich, die Patrone 2 in die Filtereinrichtung 1 einzusetzen, ohne dass der Monteur auf die Filterwand 3 greifen muss. Die komplette Montagebewegung kann vielmehr über die Handhabe 7 gesteuert werden. Das Risiko, dass die Filterwand 3 beim Montagevorgang beschädigt wird, wird dadurch außerordentlich gering gehalten.

## Patentansprüche

1. Staubfilter-Patrone mit einer Filterwand (3), die einen Innenraum (5) umschließt, der an einem Ende (6) geschlossen ist, und einer Befestigungsgeometrie (12) am anderen Ende, **dadurch gekennzeichnet, dass** die Patrone (2) im Bereich der Befestigungsgeometrie (12) eine Handhabe (7) aufweist.

2. Patrone nach Anspruch 1, **dadurch gekennzeichnet, dass** die Handhabe (7) druckfest ausgebildet ist.

3. Patrone nach Anspruch 1 oder 2, **dadurch gekennzeichnet, dass** die Handhabe (7) durch eine Drehmoment übertragende Verbindung mit der Befestigungsgeometrie (12) verbunden ist.

4. Patrone nach einem der Ansprüche 1 bis 3, **dadurch gekennzeichnet, dass** die Handhabe (7) eine Ringwand (8) aufweist.

5. Patrone nach Anspruch 4, **dadurch gekennzeichnet, dass** die Ringwand (8) eine axiale Länge von mindestens 40 mm aufweist.

6. Patrone nach Anspruch 4 oder 5, **dadurch gekennzeichnet, dass** innerhalb der Ringwand (8) eine der Filterwand (3) zugewandte Bodenwand (16) ausgebildet ist, die die Filterwand (3) stirnseitig abdeckt.

7. Patrone nach Anspruch 6, **dadurch gekennzeichnet, dass** die Bodenwand (16) einen parallel zur Ringwand (8) gerichteten Flansch (17) aufweist, der mit der Bodenwand (16) und der Ringwand (8) einen im Querschnitt U-förmigen Aufnahmeraum (18) bildet, in den die Filterwand (3) hineinragt.

8. Patrone nach Anspruch 7, **dadurch gekennzeichnet, dass** der Aufnahmeraum (18) zumindest teilweise mit einer Füllmasse (19) gefüllt ist.

9. Patrone nach einem der Ansprüche 1 bis 6, **dadurch gekennzeichnet, dass** die Handhabe (7) über eine Stirnwand (20) mit der Befestigungsgeometrie (12) verbunden ist.

10. Patrone nach einem der Ansprüche 1 bis 9, **dadurch gekennzeichnet, dass** die Handhabe (7) eine Drehmomentangriffsgeometrie aufweist.

11. Filtereinrichtung mit mindestens einer Filterpatrone (2) nach einem der Ansprüche 1 bis 10.

12. Filtereinrichtung nach Anspruch 11, **dadurch gekennzeichnet, dass** eine Blasgasdüse (10) in den Innenraum (5) gerichtet ist, wobei die Handhabe (7) einen Abstand zwischen der Filterwand (3) und der Blasgasdüse (10) einstellt.

13. Filtereinrichtung nach Anspruch 12, **dadurch gekennzeichnet, dass** die Handhabe (7) die Blasgasdüse (10) zumindest teilweise umgibt.

14. Filtereinrichtung nach einem der Ansprüche 1 bis 13, **dadurch gekennzeichnet, dass** die Filterpatrone 2 über eine Bajonett-Verbindung mit der Filtereinrichtung verbunden ist.
